# EUROPEAN PATENT SPECIFICATION

(11) **EP 4 233 256 B1**
(45) Date of publication and mention of the grant of the patent: **25.11.2026**
(21) Application number: 21806600.9
(22) Date of filing: 18.10.2021
(51) Int. Cl.: H04L 5/00, H04L 1/18, H04L 1/1829, H04L 1/1812, H04L 1/1867, H04W 72/0453, H04W 72/23

(54) **RESOURCE ALLOCATION AND HYBRID AUTOMATIC REPEAT REQUEST (HARQ) ACKNOWLEDGEMENT (ACK) FEEDBACK FOR MULTI-CELL SCHEDULING**
RESSOURCENZUWEISUNG UND RÜCKKOPPLUNG DER BESTÄTIGUNG (ACK) EINER HYBRIDEN AUTOMATISCHEN WIEDERHOLUNGSANFRAGE (HARQ) FÜR MEHRZELLENPLANUNG
ATTRIBUTION DE RESSOURCES ET RÉTROACTION D'ACCUSÉ DE RÉCEPTION (ACK) DE DEMANDE DE RÉPÉTITION AUTOMATIQUE HYBRIDE (HARQ) POUR UNE PLANIFICATION MULTI-CELLULE

(30) Priority: 21.10.2020 US 202063094690 P; 15.10.2021 US 202117451068
(43) Date of publication of application: 30.08.2023
(73) Proprietor: QUALCOMM INCORPORATED, San Diego, California 92121-1714 (US)
(72) Inventor: TAKEDA, Kazuki, San Diego, California 92121-1714 (US); CHEN, Wanshi, San Diego, California 92121-1714 (US); MONTOJO, Juan, San Diego, California 92121-1714 (US); GAAL, Peter, San Diego, California 92121-1714 (US); RICO ALVARINO, Alberto, San Diego, California 92121-1714 (US)
(74) Representative: Bardehle Pagenberg Partnerschaft mbB Patentanwälte Rechtsanwälte
(86) International application number: PCT/US2021/071912
(87) International publication number: WO 2022/087574

(56) References cited:
- CATT: "Discussion on multi-cell PDSCH scheduling via a single DCI", vol. RAN WG1, no. e-Meeting; 20200817 - 20200828, 8 August 2020 (2020-08-08), XP051917672, Retrieved from the Internet <URL:https://ftp.3gpp.org/tsg_ran/WG1_RL1/TSGR1_102-e/Docs/R1-2005697.zip R1-2005697.docx> [retrieved on 20200808]
- HUAWEI ET AL: "Discussion on the PDCCH of P(S)Cell/SCell scheduling PDSCH on multiple cells using a single DCI", vol. RAN WG1, no. E-meeting; 20200817 - 20200828, 8 August 2020 (2020-08-08), XP051918025, Retrieved from the Internet <URL:https://ftp.3gpp.org/tsg_ran/WG1_RL1/TSGR1_102-e/Docs/R1-2006413.zip R1-2006413.docx> [retrieved on 20200808]
- QUALCOMM INCORPORATED: "Multi-TRP Enhancements", vol. RAN WG1, no. Prague, Czech Republic; 20190826 - 20190830, 17 August 2019 (2019-08-17), pages 1 - 32, XP051765877, Retrieved from the Internet <URL:http://www.3gpp.org/ftp/tsg_ran/WG1_RL1/TSGR1_98/Docs/R1-1909272.zip> [retrieved on 20190817]
- HUAWEI ET AL: "Evaluations for contiguous data transmission with cross-carrier scheduling", vol. RAN WG1, no. Reno, USA; 20190513 - 20190517, 13 May 2019 (2019-05-13), XP051728052, Retrieved from the Internet <URL:http://www.3gpp.org/ftp/Meetings%5F3GPP%5FSYNC/RAN1/Docs/R1%2D1906601%2Ezip> [retrieved on 20190513]

## Description

### BACKGROUND

### Field of the Disclosure

Aspects of the present disclosure relate to wireless communications, and more particularly, to techniques for multi-cell scheduling.

### Description of Related Art

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

These multiple access technologies have been adopted in various telecommunication standards to provide a common protocol that enables different wireless devices to communicate on a municipal, national, regional, and even global level. New radio (e.g., 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

The 3GPP TSG RAN WG1 Meeting #102-e draft R1-2005697, e-Meeting, August 17th - 28th, 2020 relates to discussion on multi-cell PDSCH scheduling via a single DCI. The authors have the following proposals: Proposal 1: Multi-cell PDSCH scheduling via a single DCI should be further studied considering it can bring significant benefits in terms of PDCCH capacity, PDSCH throughput and network flexibility. Proposal 2: Two TBs should be scheduled separately on different serving cells for multi-cell PDSCH scheduling via a single DCI. Proposal 3: The DCI content for multi-cell PDSCH scheduling and HARQ feedback procedure need to be further studied.

The 3GPP TSG RAN WG1 Meeting #102-e draft R1-2006413, e-meeting, August 17 - 28, 2020, discusses the PDCCH of P(S)Cell/SCell scheduling PDSCH on multiple cells using a single DCI. The authors have the following observations: Observation 1: For two carriers of 10MHz @ 700MHz&800MHz frequency with the same SCS, when the traffic load is high, the one PDCCH scheduling PDSCH(s) on two carriers can achieve at least more than 11% throughput gain for both schemes, more than 13% throughput gain for NR when one carrier as DSS with LTE overhead, and up to 17.5% throughput gain for NR in case of single PDSCH mapping on two carriers. Observation 2: PDCCH coverage is not a concern with single DCI scheduling PDSCH(s) over two cells. Observation 3: Scheduling PDSCH(s) on multiple cells with a single PDCCH can be specified without impact on the current PDCCH blind decoding budget. Observation 4: A single PDCCH scheduling PDSCH over two cells can save up to 6.67%~15% power consumption comparing with two separate PDCCHs for scheduling. Observation 5: Using single DCI scheduling multi-carriers has large potential to be deployed with other NR features, deployment scenarios and services.

As the demand for mobile broadband access continues to increase, there exists a need for further improvements in NR and LTE technology. These improvements should be applicable to other multi-access technologies and the telecommunication standards that employ these technologies.

### SUMMARY

The scope of protection of the present invention is defined in the independent claims. Optional variants are defined in the dependent claims.

The systems, methods, and devices of the disclosure each have several aspects, no single one of which is solely responsible for its desirable attributes. After considering this discussion, and particularly after reading the section entitled "Detailed Description" one will understand how the features of this disclosure provide advantages that include improved resource allocation and hybrid automatic repeat request (HARQ) acknowledgement (ACK) feedback for multi-cell scheduling.

Certain aspects of the subject matter described in this disclosure can be implemented in a method for wireless communication by a user equipment (UE), as defined in claim 1.

Certain aspects of the subject matter described in this disclosure can be implemented in a method for wireless communication by a BS, as defined in claim 7.

Certain aspects of the subject matter described in this disclosure can be implemented in an apparatus for wireless communication by a UE, as defined in claim 13.

Certain aspects of the subject matter described in this disclosure can be implemented in an apparatus for wireless communication by a BS, as defined in claim 14.

Certain aspects of the subject matter described in this disclosure can be implemented in a computer program, as defined in claim 15.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain typical aspects of this disclosure and are therefore not to be considered limiting of its scope, for the description may admit to other equally effective aspects.
**FIG. 1** is a block diagram conceptually illustrating an example wireless communication network, in accordance with certain aspects of the present disclosure.
**FIG. 2** is a block diagram illustrating an example base station (BS) and an example user equipment (UE), in accordance with certain aspects of the present disclosure.
**FIG. 3** is an example frame format for new radio (NR), in accordance with certain aspects of the present disclosure.
**FIGs. 4A** and **4B** illustrate example scheduling options for multiple cells in a dynamic spectrum sharing (DSS) arrangement, in accordance with certain aspects of the present disclosure.
**FIG. 5** illustrates an example table providing a comparison between a physical downlink shared channel (PDSCH) per cell and a PDSCH over multiple cells, in accordance with certain aspects of the present disclosure.
**FIG. 6** is a flow diagram illustrating example operations for wireless communication by a UE, in accordance with certain aspects of the present disclosure.
**FIG. 7** is a flow diagram illustrating example operations for wireless communication by a BS, in accordance with certain aspects of the present disclosure.
**FIGs. 8A** and **8B** illustrate PDSCHs scheduled over multiple carriers having a transport block (TB) per carrier, in accordance with certain aspects of the present disclosure.
**FIG. 9** illustrates an example hybrid automatic repeat request (HARQ) and code block group-based (CBG-based) retransmission when PDSCHs scheduled over multiple carriers have a TB per carrier, in accordance with certain aspects of the present disclosure.
**FIGs. 10A** and **10B** illustrate PDSCHs scheduled over multiple carriers having a single TB, in accordance with certain aspects of the present disclosure.
**FIG. 11** illustrates an example HARQ and CBG-based retransmission when PDSCHs scheduled over multiple carriers have a single TB, in accordance with certain aspects of the present disclosure.
**FIG. 12** illustrates a communications device that may include various components configured to perform operations for the techniques disclosed herein in accordance with aspects of the present disclosure.
**FIG. 13** illustrates a communications device that may include various components configured to perform operations for the techniques disclosed herein in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer-readable mediums for multi-cell scheduling. For example, aspects provide enhanced techniques for resource allocation and hybrid automatic repeat request (HARQ) acknowledgement (ACK) feedback when scheduling multiple cells.

A downlink control information (DCI) format in a physical downlink control channel (PDCCH) may be designed to schedule multiple cells. Using a single DCI to schedule multiple cells may decrease the downlink (DL) overhead. In some aspects, the DCI format in the PDCCH of a cell may schedule two physical downlink shared channels (PDSCHs) (or two physical uplink shared channels (PUSCHs)) on two scheduled cells. In some aspects, the DCI format in the PDCCH of a cell may schedule one PDSCH (or one PUSCH) over multiple (e.g., two) scheduled cells.

In cases where the DCI format in the PDCCH of the cells schedules one PDSCH (or PUSCH) over multiple scheduled cells, different resource allocation mechanisms and HARQ retransmissions may be considered for different aspects. For example, in some aspects, a PDSCH (or a PUSCH) scheduled over multiple cells may have a TB per cell and enable HARQ retransmissions per cell. In some other aspects, a PDSCH (or a PUSCH) scheduled over multiple cells may have a single TB per a pair of cells and enable HARQ retransmissions per a pair of cells.

The following description provides examples of multi-cell scheduling in communication systems, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs.

The techniques described herein may be used for various wireless networks and radio technologies. While aspects may be described herein using terminology commonly associated with 3G, 4G, and/or new radio (e.g., 5G NR) wireless technologies, aspects of the present disclosure can be applied in other generation-based communication systems.

NR access (for example, 5G NR) may support various wireless communication services, such as enhanced mobile broadband (eMBB) targeting wide bandwidth (e.g., 80 megahertz (MHz) or beyond), millimeter wave (mmW) targeting high carrier frequency (e.g., 25 gigahertz (GHz) or beyond), massive machine type communications MTC (mMTC) targeting non-backward compatible MTC techniques, and/or mission critical targeting ultra-reliable low-latency communications (URLLC). These services may include latency and reliability requirements. These services may also have different transmission time intervals (TTIs) to meet respective quality of service (QoS) requirements. In addition, these services may co-exist in the same time-domain resources (for example, a slot or subframe) or frequency-domain resource (for example, a component carrier (CC)). NR supports beamforming and beam direction may be dynamically configured.

Multiple-input multiple-output (MIMO) transmissions with precoding may also be supported. MIMO configurations in the downlink (DL) may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells.

### Example Wireless Communications Network

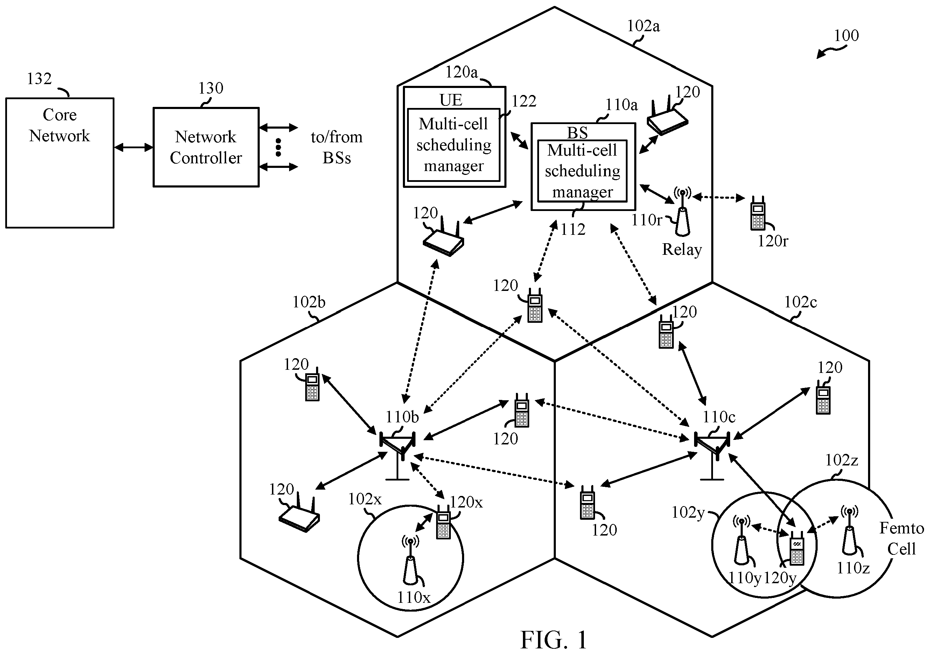

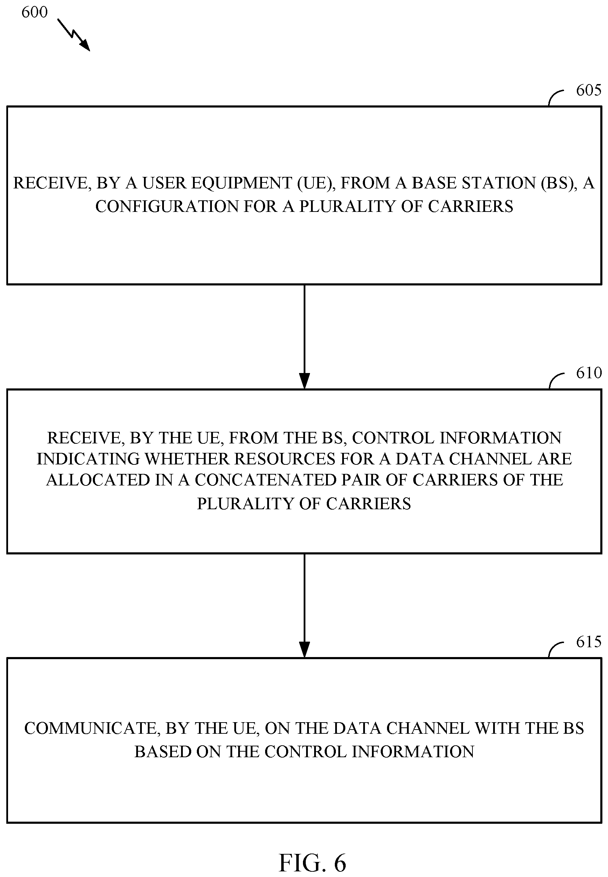

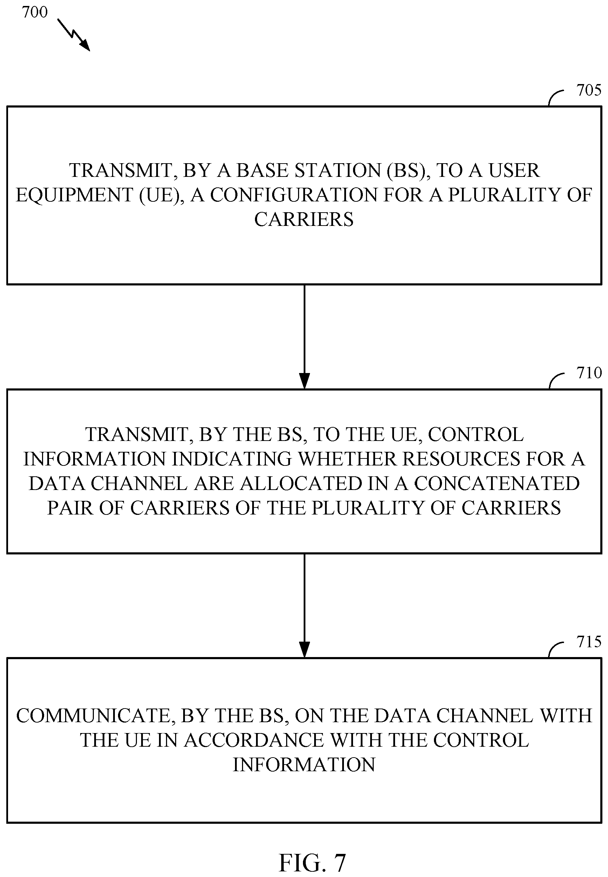

**FIG. 1** illustrates an example wireless communication network 100 in which aspects of the present disclosure may be performed. For example, as shown in **FIG. 1****,** wireless communication network 100 may include a user equipment (UE) 120a configured to perform operations 600 of **FIG. 6** and/or a base station (BS) 110a configured to perform operations 700 of **FIG. 7** to support multi-cell scheduling.

As shown in **FIG. 1****,** BS 110a includes a multi-cell scheduling manager 112. Multi-cell scheduling manager 112 may be configured to transmit to UE 120a, control information indicating whether resources for a data channel are allocated in a concatenated pair of carriers of the plurality of carriers and communicate on the data channel with UE 120a in accordance with the control information, in accordance with certain aspects of the present disclosure. Similarly, as shown in **FIG. 1****,** UE 120a includes a multi-cell scheduling manager 122. Multi-cell scheduling manager 122 may be configured to receive, from BS 110a, control information indicating whether resources for a data channel are allocated in a concatenated pair of carriers of the plurality of carriers and communicate on the data channel with BS 110a based on the control information, in accordance with certain aspects of the present disclosure.

Wireless communication network 100 may be a new radio (NR) system (e.g., a 5G NR network). As shown in **FIG. 1****,** wireless communication network 100 may be in communication with a core network 132. Core network 132 may be in communication with one or more BSs 110 and/or UEs 120 in wireless communication network 100 via one or more interfaces.

Further, as illustrated in **FIG. 1****,** wireless communication network 100 may include a number of BSs 110a-z (each also individually referred to herein as BS 110 or collectively as BSs 110) and other network entities. A BS 110 may provide communication coverage for a particular geographic area, sometimes referred to as a "cell", which may be stationary or may move according to the location of a mobile BS 110. In some examples, BSs 110 may be interconnected to one another and/or to one or more other BSs or network nodes (not shown) in wireless communication network 100 through various types of backhaul interfaces (e.g., a direct physical connection, a wireless connection, a virtual network, or the like) using any suitable transport network. In the example shown in **FIG. 1****,** BSs 110a, 110b and 110c may be macro BSs for the macro cells 102a, 102b and 102c, respectively. BS 110x may be a pico BS for a pico cell 102x. BSs 110y and 110z may be femto BSs for the femto cells 102y and 102z, respectively. A BS 110 may support one or multiple cells. A network controller 130 may couple to a set of BSs 110 and provide coordination and control for these BSs 110. Network controller 130 may communicate with BSs 110 via a backhaul. BSs 110 may also communicate with one another (for example, directly or indirectly) via wireless or wireline backhaul.

BSs 110 communicate with UEs 120a-y (each also individually referred to herein as UE 120 or collectively as UEs 120) in wireless communication network 100. UEs 120 (e.g., 120x, 120y, etc.) may be dispersed throughout wireless communication network 100, and each UE 120 may be stationary or mobile.

Wireless communication network 100 may also include relay stations (e.g., relay station 110r), also referred to as relays or the like, that receive a transmission of data and/or other information from an upstream station (e.g., a BS 110a or a UE 120r) and send a transmission of the data and/or other information to a downstream station (e.g., a UE 120 or a BS 110), or that relay transmissions between UEs 120, to facilitate communication between devices.

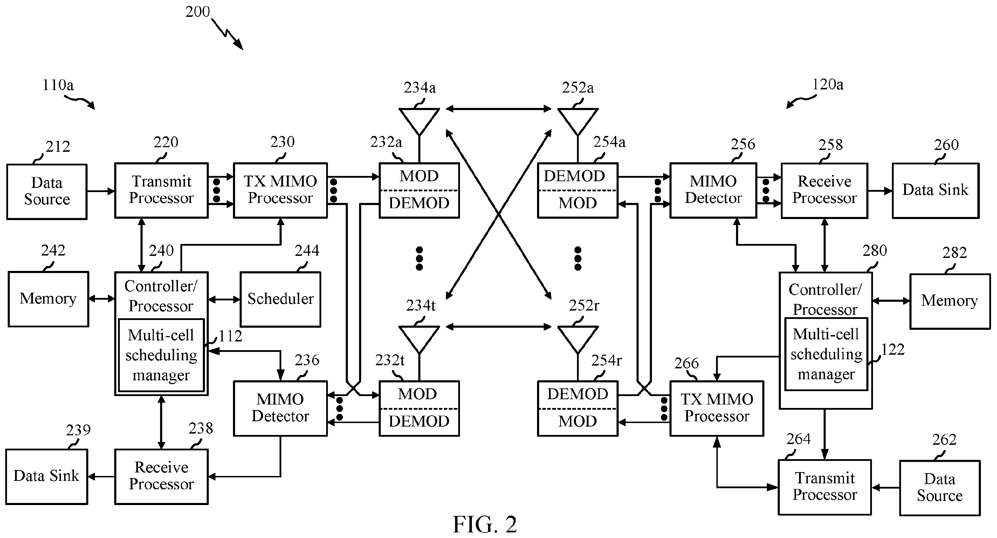

**FIG. 2** is a block diagram illustrating example components of BS 110a and UE 120a (e.g., in wireless communication network 100 of **FIG. 1**), which may be used to implement aspects of the present disclosure.

At BS 110a, a transmit processor 220 may receive data from a data source 212 and control information from a controller/processor 240. The control information may be for the physical broadcast channel (PBCH), physical control format indicator channel (PCFICH), physical hybrid automatic repeat request (HARQ) indicator channel (PHICH), physical downlink control channel (PDCCH), group common PDCCH (GC PDCCH), etc. The data may be for the physical downlink shared channel (PDSCH), etc. A medium access control (MAC)-control element (MAC-CE) is a MAC layer communication structure that may be used for control command exchange between wireless nodes. The MAC-CE may be carried in a shared channel such as a physical downlink shared channel (PDSCH), a physical uplink shared channel (PUSCH), or a physical sidelink shared channel (PSSCH).

Transmit processor 220 may process (e.g., encode and symbol map) the data and control information to obtain data symbols and control symbols, respectively. Transmit processor 220 may also generate reference symbols, such as for the primary synchronization signal (PSS), secondary synchronization signal (SSS), and channel state information reference signal (CSI-RS). A transmit (TX) multiple-input multiple-output (MIMO) processor 230 may perform spatial processing (e.g., precoding) on the data symbols, the control symbols, and/or the reference symbols, if applicable, and may provide output symbol streams to the modulators (MODs) in transceivers 232a-232t. Each modulator in transceivers 232a-232t may process a respective output symbol stream (e.g., for orthogonal frequency division multiplexing (OFDM), etc.) to obtain an output sample stream. Each modulator may further process (e.g., convert to analog, amplify, filter, and upconvert) the output sample stream to obtain a downlink (DL) signal. DL signals from modulators in transceivers 232a-232t may be transmitted via the antennas 234a-234t, respectively.

At UE 120a, antennas 252a-252r may receive the DL signals from BS 110a and may provide received signals to the demodulators (DEMODs) in transceivers 254a-254r, respectively. Each demodulator in transceivers 254a-254r may condition (e.g., filter, amplify, downconvert, and digitize) a respective received signal to obtain input samples. Each demodulator may further process the input samples (e.g., for OFDM, etc.) to obtain received symbols. A MIMO detector 256 may obtain received symbols from all the demodulators in transceivers 254a-254r, perform MIMO detection on the received symbols if applicable, and provide detected symbols. A receive processor 258 may process (e.g., demodulate, deinterleave, and decode) the detected symbols, provide decoded data for UE 120a to a data sink 260, and provide decoded control information to a controller/processor 280.

On the uplink (UL), at UE 120a, a transmit processor 264 may receive and process data (e.g., for the PUSCH) from a data source 262 and control information (e.g., for the physical uplink control channel (PUCCH) from controller/processor 280. Transmit processor 264 may also generate reference symbols for a reference signal (RS) (e.g., for the sounding reference signal (SRS)). The symbols from transmit processor 264 may be precoded by a TX MIMO processor 266 if applicable, further processed by the modulators (MODs) in transceivers 254a-254r (e.g., for single-carrier frequency division multiplexing (SC-FDM), etc.), and transmitted to BS 110a. At BS 110a, the UL signals from UE 120a may be received by antennas 234, processed by modulators in transceivers 232a-232t, detected by MIMO detector 236 if applicable, and further processed by receive processor 238 to obtain decoded data and control information sent by UE 120a. Receive processor 238 may provide the decoded data to a data sink 239 and the decoded control information to controller/processor 240.

Memories 242 and 282 may store data and program codes for BS 110a and UE 120a, respectively. A scheduler 244 may schedule UEs for data transmission on the DL and/or UL.

Antennas 252, processors 266, 258, 264, and/or controller/processor 280 of UE 120a and/or antennas 234, processors 220, 230, 238, and/or controller/processor 240 of BS 110a may be used to perform the various techniques and methods described herein. For example, as shown in **FIG. 2****,** controller/processor 240 of BS 110a has a multi-cell scheduling manager 112 that may be configured for transmitting to UE 120a, control information indicating whether resources for a data channel are allocated in a concatenated pair of carriers of the plurality of carriers and communicating on the data channel with UE 120a in accordance with the control information, in accordance with certain aspects described herein. As shown in **FIG. 2****,** controller/processor 280 of UE 120a has multi-cell scheduling manager 122 that may be configured for receiving, from BS 110a, control information indicating whether resources for a data channel are allocated in a concatenated pair of carriers of the plurality of carriers and communicating on the data channel with BS 110a based on the control information, in accordance with certain aspects described herein. Although shown at the controller/processor, other components of UE 120a and BS 110a may be used to perform the operations described herein.

NR may utilize OFDM with a cyclic prefix (CP) on the UL and DL. NR may support half-duplex operation using time division duplexing (TDD). OFDM and SC-FDM partition the system bandwidth into multiple orthogonal subcarriers, which are also commonly referred to as tones, bins, etc. Each subcarrier may be modulated with data. Modulation symbols may be sent in the frequency domain with OFDM and in the time domain with SC-FDM. The spacing between adjacent subcarriers may be fixed, and the total number of subcarriers may be dependent on the system bandwidth. The minimum resource allocation, called a resource block (RB), may be 12 consecutive subcarriers. The system bandwidth may also be partitioned into subbands. For example, a subband may cover multiple RBs. NR may support a base subcarrier spacing (SCS) of 15 kilohertz (KHz) and other SCS may be defined with respect to the base SCS (e.g., 30 kHz, 60 kHz, 120 kHz, 240 kHz, etc.).

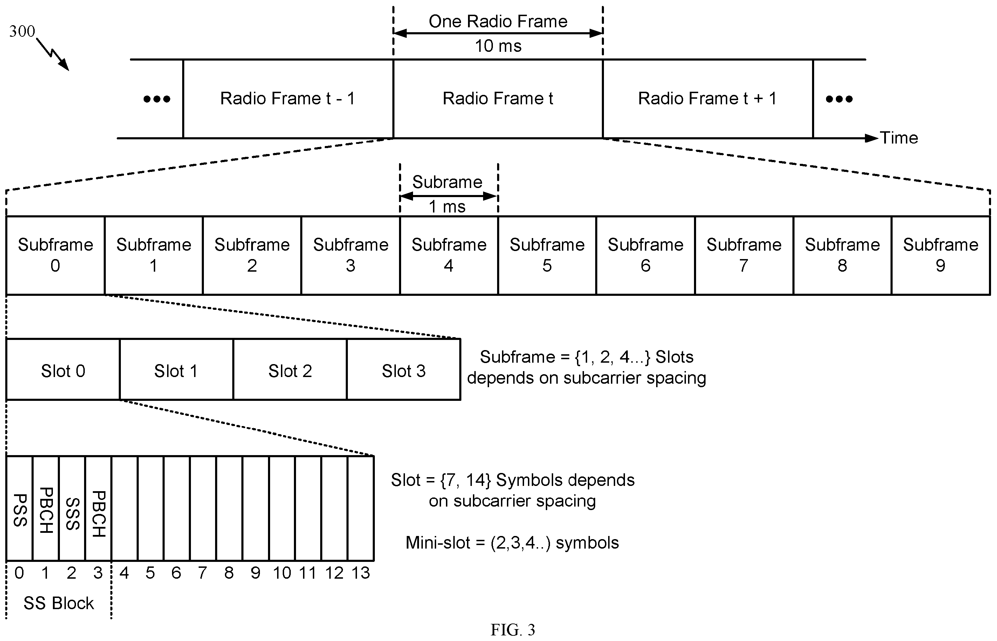

**FIG. 3** is a diagram showing an example of a frame format 300 for certain wireless communication networks (e.g., NR), in accordance with certain aspects of the present disclosure. The transmission timeline for each of the DL and UL may be partitioned into units of radio frames. Each radio frame may have a predetermined duration (e.g., 10 milliseconds (ms)) and may be partitioned into 10 subframes, each of 1 ms, with indices of 0 through 9. Each subframe may include a variable number of slots (e.g., 1, 2, 4, 8, 16, ... slots) depending on the SCS. Each slot may include a variable number of symbol periods (e.g., 7 or 14 symbols) depending on the SCS. The symbol periods in each slot may be assigned indices. A mini-slot, which may be referred to as a sub-slot structure, refers to a transmit time interval (TTI) having a duration less than a slot (e.g., 2, 3, or 4 symbols). Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

Dynamic spectrum sharing (DSS) allows an existing LTE carrier to operate 5G NR and LTE simultaneously. DSS may be based on intelligent scheduler algorithms that enable performance improvements as the mix of 4G and 5G devices in the network changes over time. DSS enables a first carrier, such as an NR carrier, and a second carrier, such as a DSS carrier, to be deployed in a DSS arrangement for DL (or UL) communications. In the DSS arrangement, resource sharing between the NR and DSS carriers is based on time division multiplexing (TDM) and frequency division multiplexing (FDM) modes.

Downlink control information (DCI), carried by the physical downlink control channel (PDCCH), carries control information used to schedule user data, e.g., PDSCH on the DL and physical uplink shared channel (PUSCH) on the UL. The DCI indicates the location in time and frequency of the data that is scheduled for transmission, the modulation and coding schemes (MCSs) used, the number of antenna ports or layers, as well as other aspects such as hybrid automatic repeat request (HARQ). A UE receiving the DCI may decode the DCI before it is able to decode DL data or transmit UL data.

In a DSS arrangement, the DCI format may be designed to schedule multiple cells. In some aspects, one DCI format in a PDCCH of a cell may schedule two PDSCHs on two scheduled cells. In some aspects, one DCI format in a PDCCH of a cell may schedule one PDSCH over two scheduled cells.

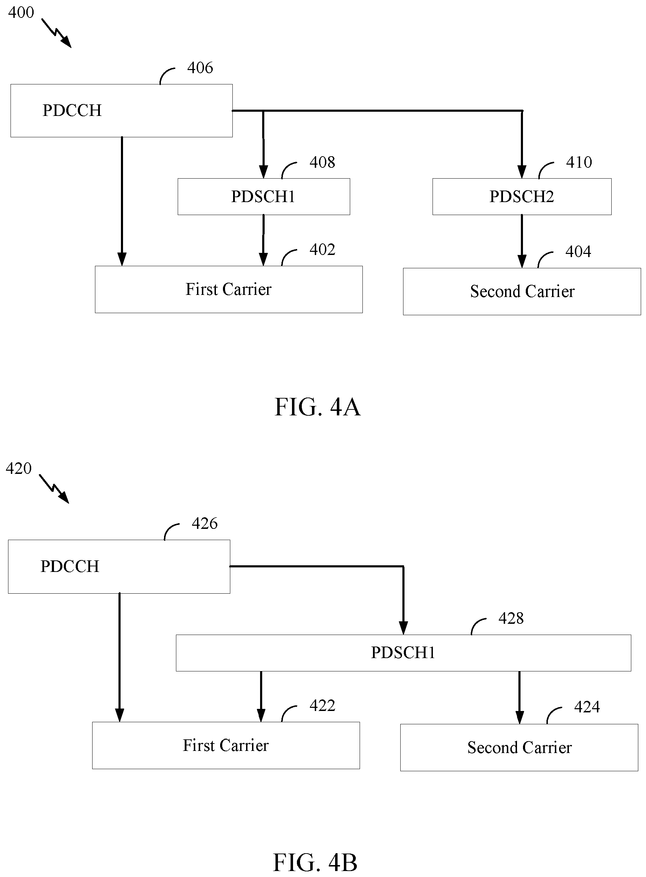

**FIGs. 4A** and **4B** illustrate scheduling options for multiple cells in a DSS arrangement 400, in accordance with certain aspects of the present disclosure. As shown in **FIG. 4A****,** DSS arrangement 400 illustrates deployment of a first cell operating in a first carrier 402 on the same frequency band as a second cell operating in a second carrier 404. In some cases, first carrier 402 and second carrier 404 are NR only carriers. In some cases, first carrier 402 and second carrier 404 are DSS carriers. In some cases, one of the first carrier 402 or the second carrier 404 is an NR only carrier and the other carrier is a DSS carrier.

DSS arrangement 400 uses a scheduling option where one DCI format in a PDCCH 406 is used to schedule a PDSCH 408 for the cell operating in the first carrier 402 and the PDSCH 410 for the cell operating in the second carrier 404.

Similar to **FIG. 4A****,** as shown in **FIG. 4B****,** DSS arrangement 420 illustrates deployment of a cell operating a first carrier 422 on the same frequency band as a cell operating in a second carrier 424. In some cases, first carrier 422 and second carrier 424 are NR only carriers. In some cases, first carrier 422 and second carrier 424 are DSS carriers. In some cases, one of the first carrier 422 or the second carrier 424 is an NR only carrier and the other carrier is a DSS carrier.

DSS arrangement 420 uses a scheduling option where one DCI format in a PDCCH 426 is used to schedule one PDSCH 428 for both the scheduled cell operating in the first carrier 402 and the scheduled cell operating in the second carrier 404.

Multi-cell PDSCH scheduling may be considered for a multitude of UE configurations. In some aspects, multi-cell PDSCH scheduling may be designed for a UE configured with inter-band carrier aggregation (CA), where a primary cell (Pcell) and secondary cell (Scell) are aggregated for the UE. The PCell for the UE operates on a DSS carrier (e.g., same carrier is also used for serving LTE users). In some examples, the SCS for the Pcell and Scell may be different. In some examples, the SCS for the Pcell and Scell may be the same. In some examples, the intra-band CA may involve multiple serving cells having the same SCS (with all cells operating on non-DSS carriers). In some examples, the intra-band CA may involve a Pcell and multiple Scells (with at least the Scells operating on non-DSS carriers).

Although DSS supports the dynamic assignment of resources between 5G and LTE subscribers in the existing low band LTE service area, the DSS arrangement may have a negative impact on spectral efficiency resulting from the additional management overhead traffic required by DSS. Accordingly, what is needed are techniques and apparatus for designing a PDCCH format such that downlink overhead is decreased and spectral efficiency of the DSS carrier is improved. While certain examples are described with respect to a DSS carrier to facilitate understanding, the aspects described herein are applicable to reduce overhead for any suitable carrier.

### Example Resource Allocation and Hybrid Automatic Repeat Request (HARQ) Acknowledgement (ACK) Feedback for Multi-Cell Scheduling

Aspects of the present disclosure provide apparatus, methods, processing systems, and computer-readable mediums for multi-cell scheduling. For example, certain aspects provide enhanced techniques for resource allocation and hybrid automatic repeat request (HARQ) acknowledgement (ACK) feedback (e.g., in a HARQ message) when scheduling multiple cells (or carriers). A cell generally refers to a coverage area of a carrier.

As mentioned above, a downlink control information (DCI) format may be designed to schedule multiple carriers. In some aspects, one DCI format in a physical downlink control channel (PDCCH) of a carrier may schedule two physical downlink shared channels (PDSCHs) (or physical uplink shared channels (PUSCHs)) on two scheduled carriers. In some aspects, one DCI format in a PDCCH of a carrier may schedule one PDSCH (or a PUSCH) over two scheduled carriers. A user equipment (UE) may receive, from a base station (BS), the DCI indicating whether resources for a data channel (e.g., PDSCH or PUSCH) are allocated among multiple carriers, and use this DCI to communicate on the data channel with the BS.

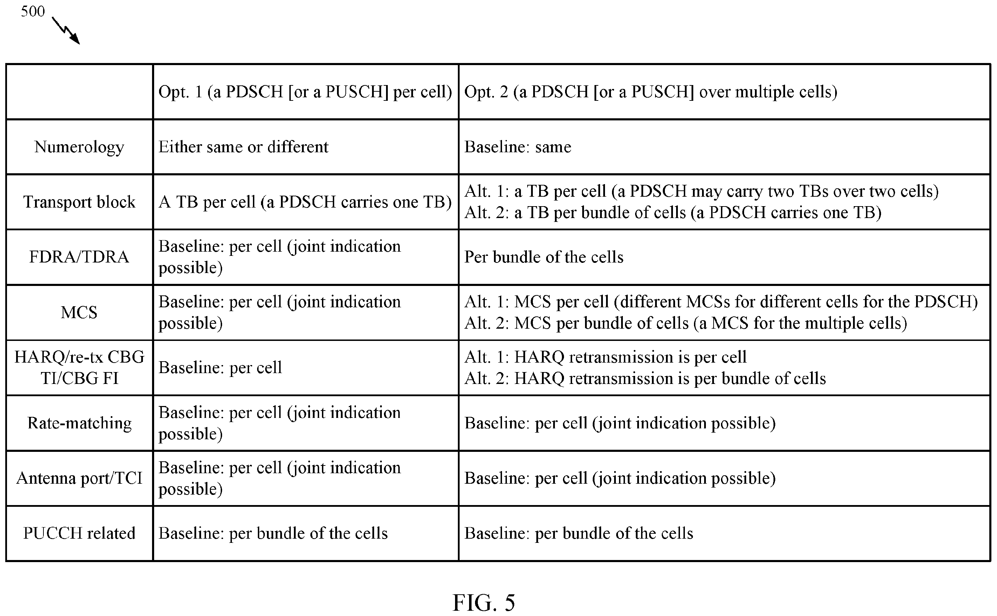

**FIG. 5** illustrates an example table 500 providing a comparison between scheduling a PDSCH (or PUSCH) per cell and scheduling a PDSCH (or PUSCH) over multiple cells, in accordance with certain aspects of the present disclosure. As shown in table 500 of **FIG. 5****,** using one DCI format to schedule a PDSCH/PUSCH per cell, for any number of cells, may include fields for each of the scheduled cells or fields that are applicable to a bundle of cells (also referred to herein as a pair of cells, or a set of cells). While certain examples are described herein for a pair of cells to facilitate understanding, the aspects of the present disclosure are applicable to any number of cells equal to or greater than two cells. Further, when scheduling a PDSCH/PUSCH over multiple cells, many options may be considered. For example, the PDSCH/PUSCH may carry two transport blocks (TBs) over two cells wherein each TB is per cell or the PDSCH/PUSCH may carry only one TB for a pair of cells. Options for other fields in the PDSCH/PUSCH may include a modulation and coding scheme (MCS) and hybrid automatic repeat request (HARQ)/re-transmission code block group (CBG) transmission information (TI) or CBG flushing out information (FI), as shown in table 500.

**FIG. 6** is a flow diagram illustrating operations 600 for wireless communication by a UE, in accordance with the present invention. Operations 600 may be performed, for example, by UE 120a in wireless communication network 100.

Operations 600 may be implemented as software components that are executed and run on one or more processors (e.g., controller/processor 280 of **FIG. 2**). Further, the transmission and reception of signals by the UE in operations 600 may be enabled, for example, by one or more antennas (e.g., antennas 252 of **FIG. 2**). In certain aspects, the transmission and/or reception of signals by the UE may be implemented via a bus interface of one or more processors (e.g., controller/processor 280) obtaining and/or outputting signals.

Operations 600 begin, at block 605, by a UE receiving, from a BS, a configuration for a plurality of carriers. At block 610, the UE receives, from the BS, control information indicating whether resources for a data channel (e.g., a PUSCH or a PDSCH) are allocated in a concatenated pair of carriers of the plurality of carriers. At block 615, the UE communicates on the data channel with the BS based on the control information.

While certain operations of the present disclosure are described with respect to carriers, the aspects described herein are applicable to any frequency bands, such as a concatenated pair of bandwidth parts (BWPs). For instance, at block 610, the UE receives, from the BS, control information indicating whether resources for a data channel (e.g., a PUSCH or a PDSCH) are allocated in a concatenated pair of BWPs of a plurality of BWPs of the carriers.

**FIG. 7** is a flow diagram illustrating operations 700 for wireless communication by a BS, in accordance with present invention. Operations 700 may be performed, for example, by BS 110a in wireless communication network 100. Operations 700 may be complementary operations by the BS to the operations 600 performed by the UE.

Operations 700 may be implemented as software components that are executed and run on one or more processors (e.g., controller/processor 240 of **FIG. 2**). Further, the transmission and reception of signals by the BS in operations 700 may be enabled, for example, by one or more antennas (e.g., antennas 234 of **FIG. 2**). In certain aspects, the transmission and/or reception of signals by the BS may be implemented via a bus interface of one or more processors (e.g., controller/processor 240) obtaining and/or outputting signals.

Operations 700 begin, at block 705, by the BS transmitting, to a UE, a configuration for a plurality of carriers (or any frequency band such as BWPs). At block 710, the BS transmits, to the UE, control information indicating whether resources for a data channel (e.g., a PDSCH or a PUSCH) are allocated in a concatenated pair of carriers of the plurality of carriers. At block 715, the BS communicates on the data channel with the UE in accordance with the control information.

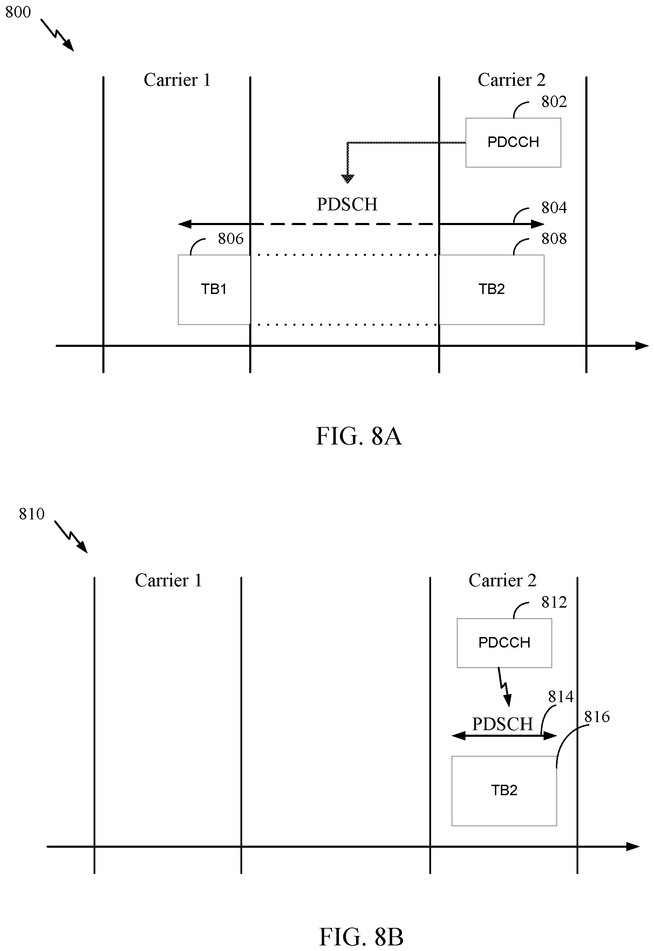

Operations 600 and 700 of **FIGs. 6** and **7****,** respectively, may be understood with reference to diagrams 800, 810, 900, 1000, 1010, 1100 of **FIGs. 8A, 8B** **9****,** **10A, 10B** and **11****,** respectively, which illustrate multi-cell PDSCH scheduling. The aspects described with respect to **FIGs. 8A, 8B****,** **9****,** **10A, 10B****,** and **11** are also applicable to multi-cell PUSCH scheduling.

In some aspects, scheduling a PDSCH (or a PUSCH) over multiple carriers may generate a TB per carrier and HARQ retransmissions per carrier.

**FIGs. 8A** and **8B** illustrate PDSCHs scheduled over multiple carriers having a TB per carrier, in accordance with certain aspects of the present disclosure. As shown in **FIG. 8A****,** in some cases, a frequency-domain resource allocation may result in scheduling a PDSCH, e.g., PDSCH 804, over multiple carriers. More specifically, one DCI format in PDCCH 802 may schedule PDSCH 804 spanning over a first carrier, carrier 1, and a second carrier, carrier 2. While deployed on the same frequency band, a frequency gap may exist between the two carriers. The UE identifies a pair of concatenated carriers based on a configuration (e.g., higher layer configuration) for a plurality of carriers received from the BS.

In some aspects, with a PDSCH spanning two carriers, the UE may determine that a first TB (e.g., TB 806) is generated on carrier 1 based on PDSCH 804 spanning in carrier 1 and a second TB (e.g., TB 808) is generated on carrier 2 based on PDSCH 804 spanning in carrier 2.

The UE may determine a size of each of the first TB and the second TB. This determination may be based on a number of factors including an amount of resources allocated for the data channel in carrier 1 and carrier 2, respectively, and the MCS for each cell. In some examples, the MCS for each carrier may be common to the plurality of carriers. In some examples, the MCS for each carrier may be different.

In some aspects, while the UE may identify a pair of concatenated carriers based on a configuration from the BS, the UE may not know which carrier contains the highest resource block (RB) and which carrier contains the lowest RB for RB indexing. Accordingly, the UE may determine the order of carriers (also referred to herein as "carrier order") in the concatenated pair to identify high and low RBs. In some aspects, the UE may determine a carrier order associated with the concatenated pair of carriers based on an index associated with a serving cell, an identifier of a bandwidth part (BWP), or a configuration received from the BS.

In some aspects, the UE (and BS) may perform interleaving operations (e.g., physical resource block to virtual resource block (PRB-to-VRB) mapping) for the data channel based on an interleaving configuration that is specific to each of the concatenated pair of carriers. The interleaving may be carried out in each carrier in which is it enabled.

**FIG. 8B** illustrates frequency-domain resource allocation resulting in scheduling PDSCH for only one of the carriers, in accordance with certain aspects of the present disclosure. More specifically, one DCI format in PDCCH 812 may schedule PDSCH 814 for only the second carrier, carrier 2 (and not the first carrier, carrier 1). Accordingly, the BS may generate only one TB, e.g., a second TB, TB 816, on carrier 2. For example, the BS may generate a first TB with size zero on carrier 1.

In addition to determining sizes of each of the first TB and the second TB, the UE may communicate a HARQ ACK or negative acknowledgement (NACK) indication for each of the first TB and the second TB. Frequency-domain resource allocation may result in scheduling the PDSCH on either both carriers or only one of the carriers in the pair of concatenated carriers. Based on the resource allocation for the PDSCH, the UE may generate a HARQ NACK indication for the PDSCH on the carrier considered as non-scheduled using a semi-static HARQ codebook. When the UE fails to detect the DCI format, the UE may not know whether the DCI format schedules PDSCH on either both of the carriers or only one of the carriers. Accordingly, in the semi-static HARQ codebook design, the UE may generate ACK/NACK bits for the first TB and the second TB and continue to generate ACK/NACK bits for both carrier 1 and carrier 2 while PDSCH spanning across two carriers continues to be a possibility. In other words, the UE may generate a separate HARQ indication for each of the concatenated pair of carriers even though the PDSCH is received on one of the carriers. For instance, the UE may receive a TB on only one of the concatenated pair of carriers, and communicate a separate HARQ indication for each of the concatenated pair of carriers.

When using a dynamic HARQ-ACK codebook, the downlink (DL) assignment index (e.g., counter downlink assignment (C-DAI)) may be incremented with one or two bits depending upon a number of carriers on which the PDSCH is mapped. In other words, the UE may communicate, with the BS, a HARQ message having a DAI, the DAI being incremented by one or two after each data channel transmission based on whether resources for the data channel transmission are allocated in one or both of the concatenated pair of carriers.

In some aspects, HARQ retransmission may be per cell. More specifically, retransmission of a TB for a carrier may occur on the same carrier that was used for the initial transmission for which the HARQ information is being transmitted. Cross-carrier HARQ retransmission may not be supported in some implementations. For example, the DCI may indicate, by the frequency domain resource allocation field, retransmission of either one of the two TBs on its corresponding carrier or retransmission of both of the TBs on both carriers. Accordingly, if retransmission of a PDSCH is within one carrier, then the retransmission occurs only on that carrier.

Further, code block group (CBG) based retransmission may be configurable per carrier in the pair of concatenated carriers. For example, a single DCI format may schedule retransmission of CBGs of one or both TBs on one PDSCH mapped over two carriers. CBG retransmission of a TB may occur on the same carrier as that for the initial transmission. For example, the UE may receive other control information allocating resources in the first carrier for a retransmission of one or more first CBGs of a first TB transmitted on the first carrier, and resources in a second carrier for a retransmission of one or more second CBGs of a second TB transmitted on the second carrier.

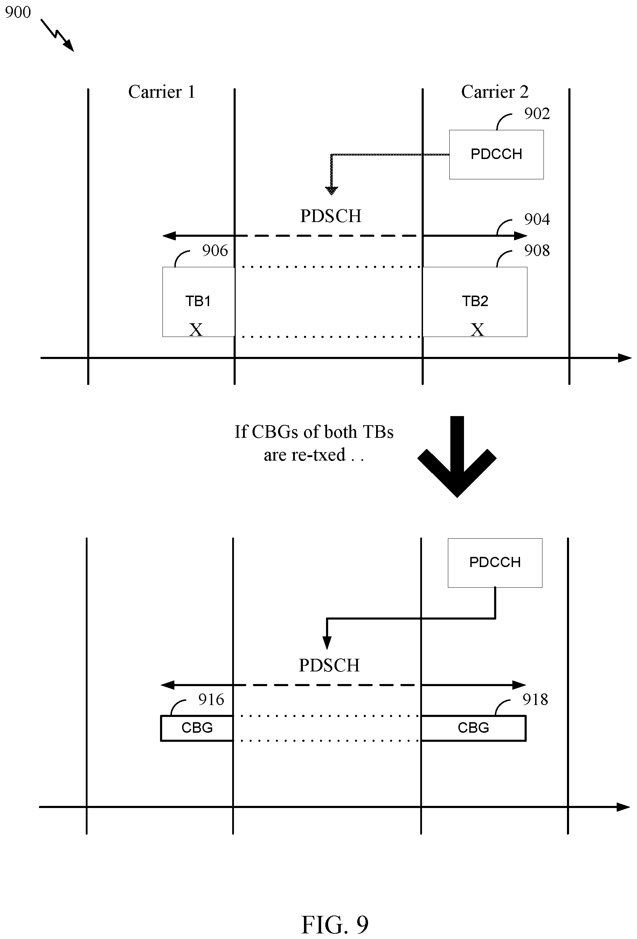

**FIG. 9** illustrates an example diagram 900 of HARQ and CBG-based retransmission when PDSCHs scheduled over multiple carriers have a TB per carrier, in accordance with certain aspects of the present disclosure. Similar to **FIG. 8****,** a frequency-domain resource allocation may result in scheduling PDSCH 904 over multiple cells as shown in **FIG. 9****.** In other words, one DCI format in PDCCH 902 may schedule PDSCH 904 spanning over a first carrier, carrier 1, and a second carrier, carrier 2. While deployed on the same frequency band, a frequency gap may be present between the two carriers. The UE may identify a pair of concatenated carriers based on a configuration (e.g., higher-layer configuration) for a plurality of carriers received from the BS. If a first transport block (e.g., TB 906) is generated in carrier 1 and a second transport block (e.g., TB 908) is generated in carrier 2, and both are generated with errors, the UE may transmit NACK feedback using the codebook group based approach.

In some aspects, it may not be important to retransmit the entire first TB, TB 906, or the entire second TB, TB 908; thus, only part of the first TB and the second TB may be retransmitted (i.e., retransmit CGBs). For example, as shown in **FIG. 9****,** CBG 916, which is only part of TB 906 may be retransmitted, and CBG 918, which is only part of TB 908 may be retransmitted. In accordance with certain aspects of the present disclosure, retransmission of CBG 916 and CBG 918 may be carried out on a same carrier, respectively, as that for the initial transmission.

In some aspects, scheduling a PDSCH over multiple carriers may generate a single TB per a pair of carriers and HARQ retransmission per a pair of carriers.

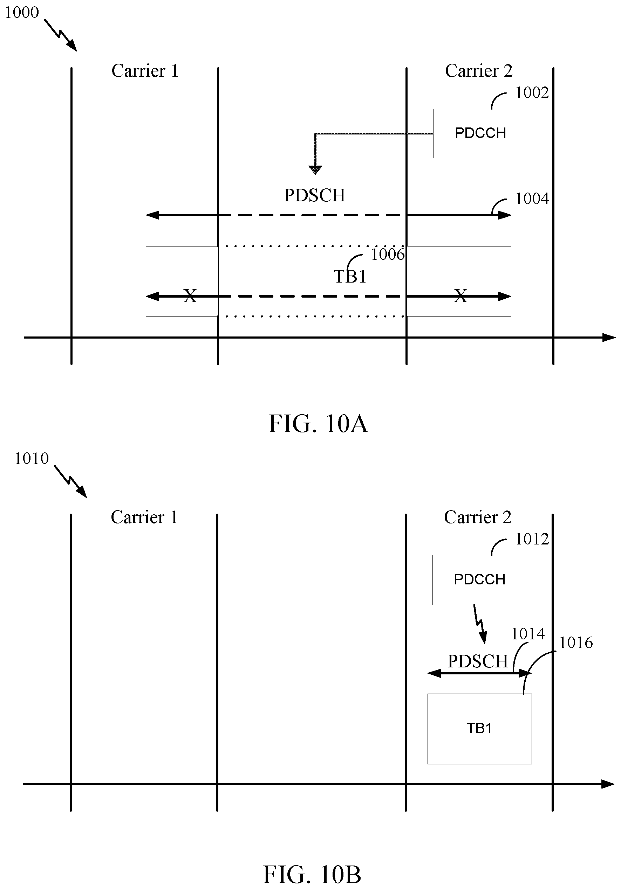

**FIG.s 10A** and **10B** illustrate PDSCHs scheduled over multiple carriers having a single TB, in accordance with certain aspects of the present disclosure. As shown in **FIG. 10A****,** and similar to **FIG. 8A****,** a frequency-domain resource allocation may result in scheduling a PDSCH, e.g., PDSCH 1004, over multiple carriers. More specifically, one DCI format in PDCCH 1002 may schedule PDSCH 1004 spanning over a first carrier, carrier 1, and a second carrier, carrier 2. While deployed on the same frequency band, a frequency gap may be present between the two carriers, as described herein. The UE may identify a pair of concatenated carriers based on a configuration (e.g., higher-layer configuration) for a plurality of cells received from the BS.

However, different from **FIG. 8A****,** in some aspects, the PDSCH may carry only one TB. Accordingly, with PDSCH 1004 spanning two carriers, the UE may determine that a single TB (e.g., TB 1006), scheduled by the DCI format, is generated, spanning across multiple carriers (e.g., TB 1006 spans across carrier 1 and carrier 2).

The UE may determine the TB size for the scheduled PDSCH. This determination may be based on a number of factors including a sum amount of resources allocated for the data channel and the MCS for the carriers.

In some aspects, the MCS for each carrier in the concatenated pair of carriers may be common. In other words, a single MCS may be indicated in the DCI for both carriers. When there is a single MCS for the PDSCH across the carriers, the MCS indicated in the DCI may be used to derive the TB size for the scheduled PDSCH.

In some aspects, the MCS for each carrier in the concatenated pair of carriers may be different. That is, the DCI may indicate different MCSs for each carrier of the pair of carriers. If the MCS for the PDSCH is different across the cells, the indicated MCSs may be used for each carrier of the PDSCH to derive the TB size.

In some aspects, the UE (and BS) may perform interleaving operations (e.g., PRB-to-VRB mapping) for the data channel based on an interleaving configuration that is specific to each of the concatenated pair of carriers. The interleaving may be carried out in each carrier in which is it enabled.

**FIG. 10B** illustrates frequency-domain resource allocation resulting in scheduling PDSCH for only one of the carriers. More specifically, one DCI format in PDCCH 1012 may schedule PDSCH 1014 for only the second carrier, carrier 2 (and not the first carrier, carrier 1). Accordingly, the BS may generate the single TB per the pair of carriers (e.g., TB 1016) on carrier 2. In addition to determining the size of the TB, the UE may communicate HARQ ACK/NACK feedback of the multi-cell PDSCH to the BS.

In some aspects, when using the semi-static HARQ codebook, all carrier within the concatenated pair of carriers may be treated as if they are a single carrier. Accordingly, the UE may communicate a HARQ indication for the TB in the concatenated pair of carriers. The UE may generate a set of bits for the carriers that is for the respective PDSCH occasions, assuming that PDSCHs are not scheduled on the carriers simultaneously. In some aspects, when using dynamic HARQ-ACK codebook, the C-DAI may be counted based on a number of PDCCHs scheduling PDSCHs.

In some aspects, HARQ retransmission may be per a pair of carriers. More specifically, retransmission may be on one of the carriers in the pair of concatenated carriers or on both of the carriers. Whether cross-carrier HARQ retransmission may be supported depends on the frequency-domain resource allocation. Further, CBG-based retransmission may be configurable per a pair of carriers. For example, a single DCI format may schedule retransmission of CBGs of a TB on one PDSCH mapped over two carriers.

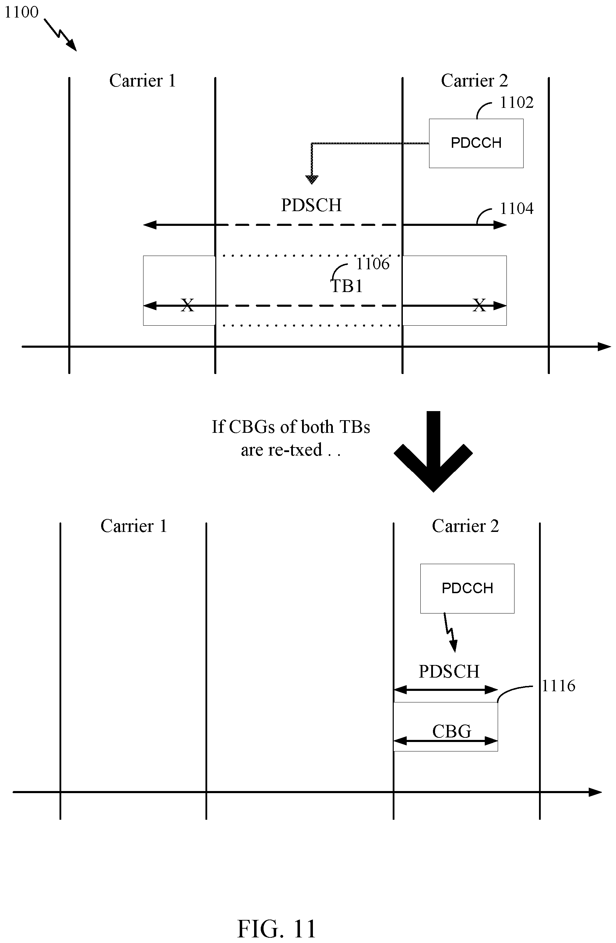

**FIG. 11** illustrates HARQ and CBG-based retransmission when PDSCHs scheduled over multiple carriers have a single TB, in accordance with certain aspects of the present disclosure. Similar to **FIG. 10A****,** in some cases, a frequency-domain resource allocation may result in scheduling a PDSCH, e.g., PDSCH 1104, over multiple carrier as shown in **FIG. 11****.** More specifically, one DCI format in PDCCH 1102 may schedule PDSCH 1104 spanning over a first carrier, carrier 1, and a second carrier, carrier 2. The UE may identify a pair of concatenated carriers based on a configuration (e.g., higher-layer configuration) for a plurality of carriers received from the BS. If a single TB, such as TB 1106, is generated with errors, the UE may transmit NACK feedback. In some aspects, it may not be important to retransmit the entire TB 1106, thus, only part of the TB may be retransmitted. For example, instead of retransmitting the entire TB 1106, CBG 1116, which is the part of the TB 1106, may be retransmitted. In accordance with certain aspects of the present disclosure, a single DCI format may schedule a retransmission of CBG 1116 on one PDSCH mapped over the two carriers.

### Example Wireless Communications Devices

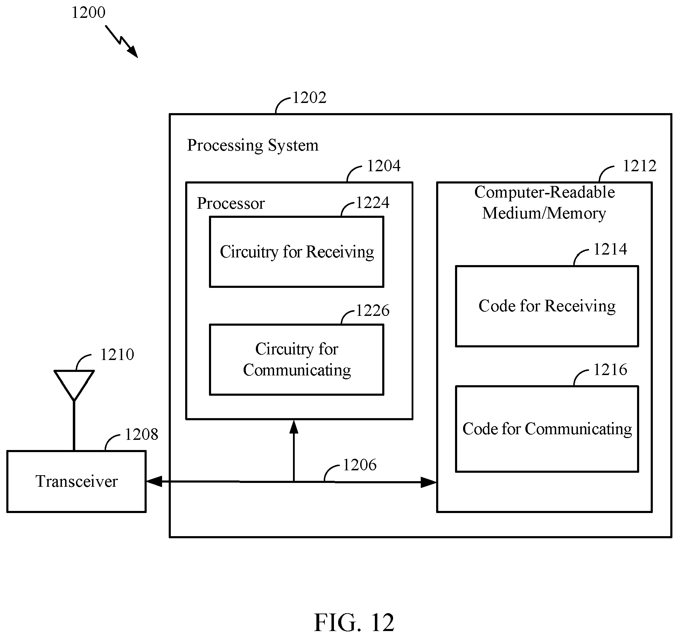

**FIG. 12** illustrates a communications device 1200 that may include various components (e.g., corresponding to means-plus-function components) operable, configured, or adapted to perform operations for the techniques disclosed herein, such as the operations illustrated in **FIG. 6****.** In some examples, communications device 1200 may be a user equipment (UE), such as UE 120a described with respect to **FIGs. 1** and **2****.**

Communications device 1200 includes a processing system 1202 coupled to a transceiver 1208 (e.g., a transmitter and/or a receiver). Transceiver 1208 is configured to transmit and receive signals for communications device 1200 via an antenna 1210, such as the various signals as described herein. Processing system 1202 may be configured to perform processing functions for the communications device 1200, including processing signals received and/or to be transmitted by communications device 1200.

Processing system 1202 includes a processor 1204 coupled to a computer-readable medium/memory 1212 via a bus 1206. In certain aspects, computer-readable medium/memory 1212 is configured to store instructions (e.g., computer-executable code) that when executed by processor 1204, cause processor 1204 to perform the operations illustrated in **FIG. 6****,** or other operations for performing the various techniques discussed herein for multi-cell scheduling.

In certain aspects, computer-readable medium/memory 1212 stores code 1214 (an example means for) for receiving (e.g., for receiving, from a BS, a configuration for a plurality of carriers and for receiving, from the BS, control information indicating whether resources for a data channel are allocated in a concatenated pair of carriers of the plurality of carriers) and code 1216 (an example means for) for communicating (e.g., for communicating on the data channel with the BS based on the control information).

In certain aspects, processor 1204 has circuitry configured to implement the code stored in computer-readable medium/memory 1212. Processor 1204 includes circuitry 1224 (an example means for) for receiving (e.g., for receiving, from a BS, a configuration for a plurality of carriers and for receiving, from the BS, control information indicating whether resources for a data channel are allocated in a concatenated pair of carriers of the plurality of carriers) and circuitry 1226 (an example means for) for communicating (e.g., for communicating on the data channel with the BS based on the control information).

In some cases, the operations illustrated in **FIG. 6****,** as well as other operations described herein, may be implemented by one or more means-plus-function components. For example, in some cases, such operations may be implemented by means for receiving, and means for communicating.

Means for communicating may include means for receiving and means for transmitting. Means for receiving or means for obtaining may include a receiver (such as receive processor 258) or antenna(s) 252 of UE 120a illustrated in **FIG. 2****.** Means for transmitting or means for outputting may include a transmitter (such as transmit processor 264) or antenna(s) 252 of UE 120a illustrated in **FIG. 2****.**

Transceiver 1208 may provide a means for receiving or transmitting information. Information may be passed on to other components of communications device 1200. Antenna 1210 may correspond to a single antenna or a set of antennas. Transceiver 1208 may provide means for transmitting signals generated by other components of communications device 1200.

Notably, **FIG. 12** is just one example, and many other examples and configurations of communications device 1200 are possible.

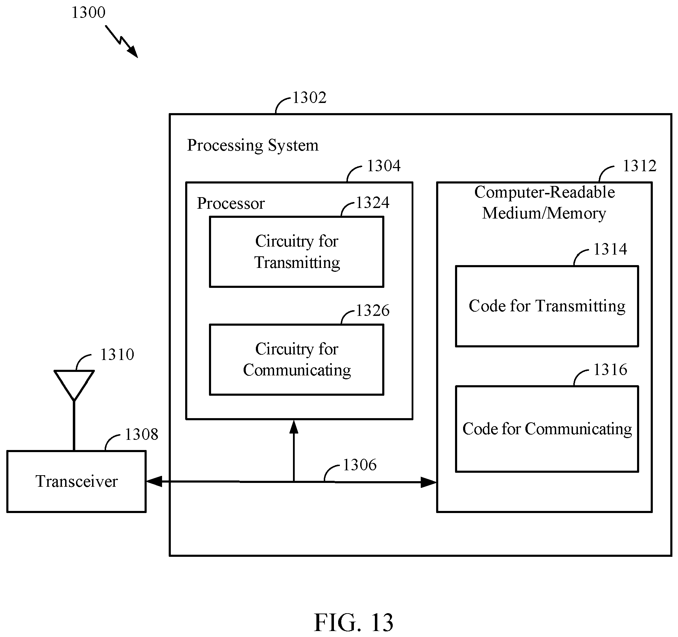

**FIG. 13** illustrates a communications device 1300 that may include various components (e.g., corresponding to means-plus-function components) operable, configured, or adapted to perform operations for the techniques disclosed herein, such as the operations illustrated in **FIG. 7****.** In some examples, communications device 1300 may be a BS, such as BS 110a described with respect to **FIGs. 1** and **2****.**

Communications device 1300 includes a processing system 1302 coupled to a transceiver 1308 (e.g., a transmitter and/or a receiver). Transceiver 1308 is configured to transmit and receive signals for communications device 1300 via an antenna 1310, such as the various signals as described herein. Processing system 1302 may be configured to perform processing functions for the communications device 1300, including processing signals received and/or to be transmitted by the communications device 1300.

Processing system 1202 includes a processor 1304 coupled to a computer-readable medium/memory 1312 via a bus 1306. In certain aspects, the computer-readable medium/memory 1312 is configured to store instructions (e.g., computer-executable code) that when executed by processor 1304, cause processor 1304 to perform the operations illustrated in **FIG. 7****,** or other operations for performing the various techniques discussed herein for multi-cell scheduling.

In certain aspects, computer-readable medium/memory 1312 stores code 1314 (an example means for) for transmitting (e.g., for transmitting to a UE, a configuration for a plurality of carriers and for transmitting, to the UE, control information indicating whether resources for a data channel are allocated in a concatenated pair of carriers of the plurality of carriers) and code 1316 for communicating (e.g., for communicating on the data channel with the UE in accordance with the control information).

In certain aspects, processor 1304 has circuitry configured to implement the code stored in the computer-readable medium/memory 1312. Processor 1304 includes circuitry 1324 (an example means for) for transmitting (e.g., for transmitting to a UE, a configuration for a plurality of carriers and for transmitting, to the UE, control information indicating whether resources for a data channel are allocated in a concatenated pair of carriers of the plurality of carriers) and circuitry 1326 (an example means for) for communicating (e.g., for communicating on the data channel with the UE in accordance with the control information).

In some cases, the operations illustrated in **FIG. 6****,** as well as other operations described herein, may be implemented by one or more means-plus-function components. For example, in some cases, such operations may be implemented by means transmitting and means for communicating.

Means for communicating may include means for receiving and means for transmitting. Means for receiving or means for obtaining may include a receiver (such as receive processor 238) or antenna(s) 234 of BS 110a illustrated in **FIG. 2****.** Means for transmitting or means for outputting may include a transmitter (such as transmit processor 220) or antenna(s) 234 of BS 110a illustrated in **FIG. 2****.**

Transceiver 1308 may provide a means for receiving or transmitting information. Information may be passed on to other components of communications device 1300. Antenna 1310 may correspond to a single antenna or a set of antennas. Transceiver 1308 may provide means for transmitting signals generated by other components of communications device 1300.

Notably, **FIG. 13** is just one example, and many other examples and configurations of communications device 1300 are possible.

Multi-cell scheduling manager 122 and multi-cell scheduling manager 112 may support wireless communication in accordance with examples as disclosed herein.

Multi-cell scheduling manager 122 and multi-cell scheduling manager 112 may be an example of means for performing various aspects described herein. Multi-cell scheduling manager 122 and multi-cell scheduling manager 112, or its sub-components, may be implemented in hardware (e.g., in uplink (UL) resource management circuitry). The circuitry may comprise of processor, DSP, an ASIC, a FPGA or other programmable logic device, discrete gate or transistor logic, discrete hardware components, or any combination thereof designed to perform the functions described in the present disclosure.

In another implementation, multi-cell scheduling manager 122 and multi-cell scheduling manager 112, or its sub-components, may be implemented in code (e.g., as configuration management software or firmware) executed by a processor, or any combination thereof. If implemented in code executed by a processor, the functions of Multi-cell scheduling manager 122 and multi-cell scheduling manager 112, or its sub-components may be executed by a general-purpose processor, a DSP, an ASIC, a FPGA or other programmable logic device.

In some examples, multi-cell scheduling manager 122 and multi-cell scheduling manager 112 may be configured to perform various operations (e.g., receiving, determining, transmitting/sending) using or otherwise in cooperation with the transceiver 1208 or 1308.

Multi-cell scheduling manager 122 and multi-cell scheduling manager 112, or its sub-components, may be physically located at various positions, including being distributed such that portions of functions are implemented at different physical locations by one or more physical components. In some examples, multi-cell scheduling manager 122 and multi-cell scheduling manager 112, or its sub-components, may be a separate and distinct component in accordance with various aspects of the present disclosure. In some examples, multi-cell scheduling manager 122 and multi-cell scheduling manager 112, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

### Additional Considerations

The techniques described herein may be used for various wireless communication technologies, such as NR (e.g., 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

In 3GPP, the term "cell" can refer to a coverage area of a Node B (NB) and/or a NB subsystem serving this coverage area, depending on the context in which the term is used. In NR systems, the term "cell" and BS, next generation NodeB (gNB or gNodeB), access point (AP), distributed unit (DU), carrier, or transmission reception point (TRP) may be used interchangeably. A BS may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS.

A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, which may be narrowband IoT (NB-IoT) devices.

In some examples, access to the air interface may be scheduled. A scheduling entity (e.g., a BS) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112(f) unless the element is expressly recited using the phrase "means for" or, in the case of a method claim, the element is recited using the phrase "step for."

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal (see **FIG. 1**), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein, for example, instructions for performing the operations described herein and illustrated in **FIG. 6** and/or **FIG. 7****.**

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. The scope of the present invention is defined by the scope of the appended claims.

## Claims

1. A method for wireless communication, the method being performed by a user equipment (120), UE, and comprising:
receiving (605), from a base station (110), BS, a configuration for a plurality of carriers;
identifying a pair of concatenated carriers of the plurality of carriers based on the configuration received from the BS;
receiving (610), from the BS (110), control information indicating whether resources for a data channel are allocated in the concatenated pair of carriers of the plurality of carriers; and
communicating (615) on the data channel with the BS (110) based on the control information, wherein the resources allocated to the data channel comprise resources from each carrier of the pair of the concatenated carriers;
wherein the configuration identifies the concatenated pair of carriers in which the resources for the data channel are allocated and used by the UE for communicating with the BS.

2. The method of claim 1, further comprising determining a carrier order associated with the concatenated pair of carriers based on an index associated with a serving cell, an identifier of a bandwidth part, BWP, or the configuration received from the BS (110), wherein one or more transport blocks, TBs, of the data channel are communicated based on the carrier order;
in particular wherein the resources for the data channel comprise resource blocks, RBs, of the one or more TBs starting from a lowest RB of one of the concatenated pair of carriers to a highest RB of another one of the concatenated pair of carriers, in accordance with the carrier order.

3. The method of claim 1, wherein the data channel comprises:
a first transport block, TB, in a first carrier of the concatenated pair of carriers; and
a second TB in a second carrier of the concatenated pair of carriers;
the method in particular further comprising determining a size of each of the first TB and the second TB based on an amount of resources allocated for the data channel in the first carrier and the second carrier, respectively, wherein the communication of the data channel is based on the size of each of the first TB and the second TB;
further in particular wherein a retransmission of the first TB is on the first carrier, and wherein a retransmission of the second TB is on the second carrier; or
the method in particular further comprising receiving other control information allocating:
resources in the first carrier for a retransmission of one or more first code block groups, CBGs, of the first TB; and
resources in the second carrier for a retransmission of one or more second CBGs of the second TB.

4. The method of claim 1, wherein communicating on the data channel comprises receiving a TB on one of the concatenated pair of carriers, the method further comprising communicating a separate hybrid automatic repeat request, HARQ, indication for each of the concatenated pair of carriers; or
the method further comprising communicating, with the BS (110), a HARQ message having a downlink assignment index, DAI, the DAI being incremented by one or two after each data channel transmission based on whether resources for the data channel transmission is allocated in one or both of the concatenated pair of carriers.

5. The method of claim 1, wherein the data channel comprises a transport block, TB, in the concatenated pair of carriers;
the method of claim in particular further comprising:
receiving other control information allocating resources for a retransmission of one or more code block groups, CBGs, of the TB in the concatenated pair of carriers; or
determining a size of the TB based on an amount of resources allocated for the data channel in the concatenated pair of carriers, wherein the communication of the data channel is based on the size of the TB; or
communicating a hybrid automatic repeat request, HARQ, indication for the TB in the concatenated pair of carriers; or
receiving other control information allocating resources for a retransmission of the TB on one or both of the concatenated pair of carriers.

6. The method of claim 1, further comprising determining a modulation and coding scheme, MCS, for each of the concatenated pair of carriers, wherein the data channel is communicated in accordance with the determined MCSs; or
further comprising determining a common MCS for the concatenated pair of carriers, wherein the data channel is communicated in accordance with the determined MCSs; or
further comprising performing interleaving operations for the data channel based on an interleaving configuration that is specific to each of the concatenated pair of carriers.

7. A method for wireless communication, the method being performed by a base station (110), BS, and comprising:
transmitting (705), to a user equipment (120), UE, a configuration for a plurality of carriers, wherein the configuration comprises identification of a pair of carriers of the plurality of carriers;
transmitting (710), to the UE (120), control information indicating whether resources for a data channel are allocated in a concatenated pair of carriers of the plurality of carriers; and
communicating (715) on the data channel with the UE (120) in accordance with the control information, wherein the resources allocated to the data channel comprise resources from each carrier of the pair of the concatenated carriers;
wherein the configuration identifies the concatenated pair of carriers in which the resources for the data channel are allocated and used for communicating with the UE.

8. The method of claim 7, wherein a carrier order associated with the concatenated pair of carriers is determined by the UE based on an index associated with a serving cell,
an identifier of a bandwidth part, BWP, or the configuration received from the BS (110), wherein one or more transport blocks, TBs, of the data channel are communicated based on the carrier order;
in particular wherein the resources for the data channel comprise resource blocks, RBs, of the one or more TBs starting from a lowest RB of one of the concatenated pair of carriers to a highest RB of another one of the concatenated pair of carriers, in accordance with the carrier order.

9. The method of claim 7, wherein the data channel comprises:
a first transport block, TB, in a first carrier of the concatenated pair of carriers; and
a second TB in a second carrier of the concatenated pair of carriers;
in particular wherein a size of each of the first TB and the second TB is based on an amount of resources allocated for the data channel in the first carrier and the second carrier, respectively, wherein the communication of the data channel is based on the size of each of the first TB and the second TB; or
in particular wherein the method further comprises transmitting other control information allocating:
resources in the first carrier for a retransmission of one or more first code block groups, CBGs, of the first TB; and
resources in the second carrier for a retransmission of one or more second CBGs of the second TB.

10. The method of claim 7, wherein communicating on the data channel comprises receiving a TB on one of the concatenated pair of carriers, the method further comprising communicating a separate hybrid automatic repeat request, HARQ, indication for each of the concatenated pair of carriers.

11. The method of claim 7, further comprising communicating, with the UE (120), a HARQ message having a downlink assignment index, DAI, the DAI being incremented by one or two after each data channel transmission based on whether resources for the data channel transmission is allocated in one or both of the concatenated pair of carriers.

12. The method of claim 7, wherein the data channel comprises a transport block, TB, in the concatenated pair of carriers.

13. An apparatus for wireless communication by a user equipment (120), UE, comprising means for performing the method of any one of the claims 1 to 6.

14. An apparatus for wireless communication by a base station (110), BS, comprising means for performing the method of any one of the claims 7 to 12.

15. A computer program comprising instructions that, when executed on one or more processors of an apparatus for wireless communication, causes the apparatus to perform the method of any one of the claims 1 to 12.

## Patentansprüche

1. Ein Verfahren zur drahtlosen Kommunikation, wobei das Verfahren von einem Benutzergerät (120), UE, durchgeführt wird und umfasst:
Empfangen (605), von einer Basisstation (110), BS, einer Konfiguration für eine Vielzahl von Trägern;
Identifizieren eines Paares von verketteten Trägern der Vielzahl von Trägern basierend auf den von der BS empfangenen Konfigurationen;
Empfangen (610), von der BS (110), von Steuerinformation, die angibt, ob Ressourcen für einen Datenkanal in dem verketteten Paar von Trägern der Vielzahl von Trägern zugewiesen sind; und
Kommunizieren (615) auf dem Datenkanal mit der BS (110) basierend auf der Steuerinformation, wobei die dem Datenkanal zugewiesenen Ressourcen Ressourcen von jedem Träger des Paares der verketteten Träger umfassen;
wobei die Konfiguration das verkettete Paar von Trägern identifiziert, in dem die Ressourcen für den Datenkanal zugewiesen sind und von dem UE zum Kommunizieren mit der BS verwendet werden.

2. Das Verfahren nach Anspruch 1, ferner umfassend Bestimmen einer Trägerreihenfolge, die mit dem verketteten Paar von Trägern assoziiert ist, basierend auf einem Index, der mit einer bedienenden Zelle assoziiert ist, einer Kennung eines Bandbreitenteils, BWP, oder der Konfiguration, die von der BS (110) empfangen wird, wobei ein oder mehrere Transportblöcke, TBs, des Datenkanals basierend auf der Trägerreihenfolge kommuniziert werden;
insbesondere wobei die Ressourcen für den Datenkanal Ressourcenblöcke, RBs, des einen oder der mehreren TBs umfassen, beginnend von einem niedrigsten RB von einem des verketteten Paares von Trägern zu einem höchsten RB von einem anderen des verketteten Paares von Trägern, gemäß der Trägerreihenfolge.

3. Das Verfahren nach Anspruch 1, wobei der Datenkanal umfasst:
einen ersten Transportblock, TB, in einem ersten Träger des verketteten Paares von Trägern; und
einen zweiten TB in einem zweiten Träger des verketteten Paares von Trägern;
wobei das Verfahren insbesondere ferner das Bestimmen einer Größe von jedem des ersten TB und des zweiten TB basierend auf einer Menge von Ressourcen umfasst, die für den Datenkanal in dem ersten Träger bzw. dem zweiten Träger zugewiesen sind, wobei die Kommunikation des Datenkanals auf der Größe von jedem des ersten TB und des zweiten TB basiert;
wobei ferner insbesondere eine erneute Übertragung des ersten TB auf dem ersten Träger erfolgt, und wobei eine erneute Übertragung des zweiten TB auf dem zweiten Träger erfolgt; oder
wobei das Verfahren insbesondere ferner das Empfangen anderer Steuerinformation umfasst, die zuweist:
Ressourcen in dem ersten Träger für eine erneute Übertragung von einer oder mehreren ersten Codeblockgruppen, CBGs, des ersten TB; und
Ressourcen in dem zweiten Träger für eine erneute Übertragung von einer oder mehreren zweiten CBGs des zweiten TB.

4. Das Verfahren nach Anspruch 1, wobei das Kommunizieren auf dem Datenkanal das Empfangen eines TB auf einem des verketteten Paares von Trägern umfasst, wobei das Verfahren ferner das Kommunizieren einer separaten Anzeige einer hybriden automatischen Wiederholungsanforderung, HARQ, für jeden des verketteten Paares von Trägern umfasst; oder
wobei das Verfahren ferner das Kommunizieren, mit der BS (110), einer HARQ-Nachricht mit einem Downlink-Zuweisungsindex, DAI, umfasst, wobei der DAI nach jeder Datenkanalübertragung um eins oder zwei erhöht wird, basierend darauf, ob Ressourcen für die Datenkanalübertragung in einem oder beiden des verketteten Paares von Trägern zugewiesen sind.

5. Das Verfahren nach Anspruch 1, wobei der Datenkanal einen Transportblock, TB, in dem verketteten Paar von Trägern umfasst;
wobei das Verfahren nach Anspruch 1 insbesondere ferner umfasst:
Empfangen anderer Steuerinformation, die Ressourcen für eine erneute Übertragung von einer oder mehreren Codeblockgruppen, CBGs, des TB in dem verketteten Paar von Trägern zuweist; oder
Bestimmen einer Größe des TB basierend auf einer Menge von Ressourcen, die für den Datenkanal in dem verketteten Paar von Trägern zugewiesen sind, wobei die Kommunikation des Datenkanals auf der Größe des TB basiert; oder
Kommunizieren einer Anzeige einer hybriden automatischen Wiederholungsanforderung, HARQ, für den TB in dem verketteten Paar von Trägern; oder
Empfangen anderer Steuerinformation, die Ressourcen für eine erneute Übertragung des TB auf einem oder beiden des verketteten Paares von Trägern zuweist.

6. Das Verfahren nach Anspruch 1, ferner umfassend Bestimmen eines Modulations- und Codierungsschemas, MCS, für jeden des verketteten Paares von Trägern, wobei der Datenkanal gemäß den bestimmten MCS kommuniziert wird; oder
ferner umfassend Bestimmen eines gemeinsamen MCS für das verkettete Paar von Trägern, wobei der Datenkanal gemäß den bestimmten MCS kommuniziert wird; oder
ferner umfassend Durchführen von Verschachtelungsoperationen für den Datenkanal basierend auf einer Verschachtelungskonfiguration, die für jeden des verketteten Paares von Trägern spezifisch ist.

7. Ein Verfahren zur drahtlosen Kommunikation, wobei das Verfahren von einer Basisstation (110), BS, durchgeführt wird und umfasst:
Übertragen (705), an ein Benutzergerät (120), UE, einer Konfiguration für eine Vielzahl von Trägern, wobei die Konfiguration eine Identifikation eines Paares von Trägern der Vielzahl von Trägern umfasst;
Übertragen (710), an das UE (120), von Steuerinformation, die angibt, ob Ressourcen für einen Datenkanal in einem verketteten Paar von Trägern der Vielzahl von Trägern zugewiesen sind; und
Kommunizieren (715) auf dem Datenkanal mit dem UE (120) gemäß der Steuerinformation, wobei die dem Datenkanal zugewiesenen Ressourcen Ressourcen von jedem Träger des Paares der verketteten Träger umfassen;
wobei die Konfiguration das verkettete Paar von Trägern identifiziert, in dem die Ressourcen für den Datenkanal zugewiesen sind und zum Kommunizieren mit dem UE verwendet werden.

8. Das Verfahren nach Anspruch 7, wobei eine Trägerreihenfolge, die mit dem verketteten Paar von Trägern assoziiert ist, von dem UE basierend auf einem Index bestimmt wird, der mit einer bedienenden Zelle assoziiert ist, einer Kennung eines Bandbreitenteils, BWP, oder der Konfiguration, die von der BS (110) empfangen wird, wobei ein oder mehrere Transportblöcke, TBs, des Datenkanals basierend auf der Trägerreihenfolge kommuniziert werden;
insbesondere wobei die Ressourcen für den Datenkanal Ressourcenblöcke, RBs, des einen oder der mehreren TBs umfassen, beginnend von einem niedrigsten RB von einem des verketteten Paares von Trägern zu einem höchsten RB von einem anderen des verketteten Paares von Trägern, gemäß der Trägerreihenfolge.

9. Das Verfahren nach Anspruch 7, wobei der Datenkanal umfasst:
einen ersten Transportblock, TB, in einem ersten Träger des verketteten Paares von Trägern; und
einen zweiten TB in einem zweiten Träger des verketteten Paares von Trägern;
insbesondere wobei eine Größe von jedem des ersten TB und des zweiten TB auf einer Menge von Ressourcen basiert, die für den Datenkanal in dem ersten Träger bzw. dem zweiten Träger zugewiesen sind, wobei die Kommunikation des Datenkanals auf der Größe von jedem des ersten TB und des zweiten TB basiert; oder
insbesondere wobei das Verfahren ferner das Übertragen anderer Steuerinformation umfasst, die zuweist:
Ressourcen in dem ersten Träger für eine erneute Übertragung von einer oder mehreren ersten Codeblockgruppen, CBGs, des ersten TB; und
Ressourcen in dem zweiten Träger für eine erneute Übertragung von einer oder mehreren zweiten CBGs des zweiten TB.

10. Das Verfahren nach Anspruch 7, wobei Kommunizieren auf dem Datenkanal das Empfangen eines TB auf einem des verketteten Paares von Trägern umfasst, wobei das Verfahren ferner Kommunizieren einer separaten Anzeige einer hybriden automatischen Wiederholungsanforderung, HARQ, für jeden des verketteten Paares von Trägern umfasst.

11. Das Verfahren nach Anspruch 7, ferner umfassend Kommunizieren, mit dem UE (120), einer HARQ-Nachricht mit einem Downlink-Zuweisungsindex, DAI, wobei der DAI nach jeder Datenkanalübertragung um eins oder zwei erhöht wird, basierend darauf, ob Ressourcen für die Datenkanalübertragung in einem oder beiden des verketteten Paares von Trägern zugewiesen sind.

12. Das Verfahren nach Anspruch 7, wobei der Datenkanal einen Transportblock, TB, in dem verketteten Paar von Trägern umfasst.

13. Eine Vorrichtung zur drahtlosen Kommunikation durch ein Benutzergerät (120), UE, umfassend Mittel zum Durchführen des Verfahrens nach einem der Ansprüche 1 bis 6.

14. Eine Vorrichtung zur drahtlosen Kommunikation durch eine Basisstation (110), BS, umfassend Mittel zum Durchführen des Verfahrens nach einem der Ansprüche 7 bis 12.

15. Ein Computerprogramm umfassend Anweisungen, die, wenn sie auf einem oder mehreren Prozessoren einer Vorrichtung zur drahtlosen Kommunikation ausgeführt werden, die Vorrichtung veranlassen, das Verfahren nach einem der Ansprüche 1 bis 12 durchzuführen.

## Revendications

1. Un procédé de communication sans fil, le procédé étant réalisé par un équipement utilisateur (120), UE, et comprenant :
la réception (605), à partir d'une station de base (110), BS, d'une configuration pour une pluralité de porteuses ;
l'identification d'une paire de porteuses concaténées de la pluralité de porteuses sur la base de la configuration reçue de la BS ;
la réception (610), à partir de la BS (110), d'informations de contrôle indiquant si des ressources pour un canal de données sont attribuées dans la paire concaténée de porteuses de la pluralité de porteuses ; et
la communication (615) sur le canal de données avec la BS (110) sur la base des informations de contrôle, dans laquelle les ressources attribuées au canal de données comprennent des ressources de chaque porteuse de la paire des porteuses concaténées ;
dans lequel la configuration identifie la paire concaténée de porteuses dans laquelle les ressources pour le canal de données sont attribuées et utilisées par l'UE pour communiquer avec la BS.

2. Procédé selon la revendication 1, comprenant en outre la détermination d'un ordre de porteuse associé à la paire concaténée de porteuses sur la base d'un indice associé à une cellule de desserte, d'un identifiant d'une partie de bande passante, BWP, ou de la configuration reçue de la BS (110), dans lequel un ou plusieurs blocs de transport, TB, du canal de données sont communiqués sur la base de l'ordre de porteuse ;
en particulier dans lequel les ressources pour le canal de données comprennent des blocs de ressources, RB, des un ou plusieurs TB en commençant par un RB le plus bas de l'une de la paire concaténée de porteuses jusqu'à un RB le plus haut d'une autre de la paire concaténée de porteuses, conformément à l'ordre de porteuse.

3. Le procédé selon la revendication 1, dans lequel le canal de données comprend :
un premier bloc de transport, TB, dans une première porteuse de la paire concaténée de porteuses ; et
un second TB dans une seconde porteuse de la paire concaténée de porteuses ;
le procédé comprenant en particulier en outre la détermination d'une taille de chacun du premier TB et du second TB sur la base d'une quantité de ressources attribuées pour le canal de données dans la première porteuse et la seconde porteuse, respectivement, dans lequel la communication du canal de données est basée sur la taille de chacun du premier TB et du second TB ;
en outre en particulier dans lequel une retransmission du premier TB se trouve sur la première porteuse, et dans lequel une retransmission du second TB se trouve sur la seconde porteuse ; ou
le procédé comprenant en particulier en outre la réception d'autres informations de contrôle attribuant :
des ressources dans la première porteuse pour une retransmission d'un ou plusieurs premiers groupes de blocs de code, CBG, du premier TB ; et
des ressources dans la seconde porteuse pour une retransmission d'un ou plusieurs seconds CBG du second TB.

4. Procédé selon la revendication 1, dans lequel la communication sur le canal de données comprend la réception d'un TB sur l'une de la paire concaténée de porteuses, le procédé comprenant en outre la communication d'une requête de répétition automatique hybride distincte, HARQ, d'une indication pour chacune de la paire concaténée de porteuses ; ou
le procédé comprenant en outre la communication, avec la BS (110), d'un message HARQ ayant un indice d'attribution de liaison descendante, DAI, le DAI étant incrémenté d'un ou deux après chaque transmission de canal de données sur la base du fait que des ressources pour la transmission de canal de données sont attribuées dans une ou deux de la paire concaténée de porteuses.

5. Procédé selon la revendication 1, dans lequel le canal de données comprend un bloc de transport, TB, dans la paire concaténée de porteuses ;
le procédé selon la revendication comprenant en outre en particulier :
la réception d'autres informations de contrôle attribuant des ressources pour une retransmission d'un ou plusieurs groupes de blocs de code, CBG, du TB dans la paire concaténée de porteuses ; ou
la détermination d'une taille du TB sur la base d'une quantité de ressources attribuées pour le canal de données dans la paire concaténée de porteuses, dans laquelle la communication du canal de données est basée sur la taille du TB ; ou
la communication d'une requête de répétition automatique hybride, HARQ, d'une indication pour le TB dans la paire concaténée de porteuses ; ou
la réception d'autres informations de contrôle attribuant des ressources pour une retransmission du TB sur une ou deux de la paire concaténée de porteuses.

6. Procédé selon la revendication 1, comprenant en outre la détermination d'un schéma de modulation et de codage, MCS, pour chacune de la paire concaténée de porteuses, dans lequel le canal de données est communiqué conformément aux MCS déterminés ; ou
comprenant en outre la détermination d'un MCS commun pour la paire concaténée de porteuses, dans lequel le canal de données est communiqué conformément aux MCS déterminés ; ou
comprenant en outre la réalisation d'opérations d'entrelacement pour le canal de données sur la base d'une configuration d'entrelacement qui est spécifique à chacune de la paire concaténée de porteuses.

7. Un procédé de communication sans fil, le procédé étant réalisé par une station de base (110), BS, et comprenant :
la transmission (705), à un équipement utilisateur (120), UE, d'une configuration pour une pluralité de porteuses, dans laquelle la configuration comprend l'identification d'une paire de porteuses de la pluralité de porteuses ;
la transmission (710), à l'UE (120), d'informations de contrôle indiquant si des ressources pour un canal de données sont attribuées dans une paire concaténée de porteuses de la pluralité de porteuses ; et
la communication (715) sur le canal de données avec l'UE (120) conformément aux informations de contrôle, dans lequel les ressources attribuées au canal de données comprennent des ressources de chaque porteuse de la paire des porteuses concaténées ;
dans lequel la configuration identifie la paire concaténée de porteuses dans laquelle les ressources pour le canal de données sont attribuées et utilisées pour communiquer avec l'UE.

8. Procédé selon la revendication 7, dans lequel un ordre de porteuse associé à la paire concaténée de porteuses est déterminé par l'UE sur la base d'un indice associé à une cellule de desserte, d'un identifiant d'une partie de bande passante, BWP, ou de la configuration reçue de la BS (110), dans lequel un ou plusieurs blocs de transport, TB, du canal de données sont communiqués sur la base de l'ordre de porteuse ;
en particulier dans lequel les ressources pour le canal de données comprennent des blocs de ressources, RB, des un ou plusieurs TB en commençant par un RB le plus bas de l'une de la paire concaténée de porteuses jusqu'à un RB le plus élevé d'une autre de la paire concaténée de porteuses, conformément à l'ordre de porteuse.

9. Procédé selon la revendication 7, dans lequel le canal de données comprend :
un premier bloc de transport, TB, dans une première porteuse de la paire concaténée de porteuses ; et
un second TB dans une seconde porteuse de la paire concaténée de porteuses ;
en particulier dans lequel une taille de chacun du premier TB et du second TB est basée sur une quantité de ressources attribuées pour le canal de données dans la première porteuse et la seconde porteuse, respectivement, dans lequel la communication du canal de données est basée sur la taille de chacun du premier TB et du second TB ; ou
en particulier dans lequel le procédé comprend en outre la transmission d'autres informations de contrôle attribuant :
des ressources dans la première porteuse pour une retransmission d'un ou plusieurs premiers groupes de blocs de code, CBG, du premier TB ; et
des ressources dans la seconde porteuse pour une retransmission d'un ou plusieurs seconds CBG du second TB.

10. Procédé selon la revendication 7, dans lequel la communication sur le canal de données comprend la réception d'un TB sur l'une de la paire concaténée de porteuses, le procédé comprenant en outre la communication d'une requête de répétition automatique hybride distincte, HARQ, d'une indication pour chacune de la paire concaténée de porteuses.

11. Procédé selon la revendication 7, comprenant en outre la communication, avec l'UE (120), d'un message HARQ ayant un indice d'attribution de liaison descendante, DAI, le DAI étant incrémenté d'un ou deux après chaque transmission de canal de données sur la base du fait que des ressources pour la transmission de canal de données sont attribuées dans une ou deux de la paire concaténée de porteuses.

12. Procédé selon la revendication 7, dans lequel le canal de données comprend un bloc de transport, TB, dans la paire concaténée de porteuses.

13. Un appareil pour la communication sans fil par un équipement utilisateur (120), UE, comprenant un moyen de réaliser le procédé selon l'une des revendications 1 à 6.

14. Un appareil pour la communication sans fil par une station de base (110), BS, comprenant un moyen de réaliser le procédé selon l'une des revendications 7 à 12.

15. Un programme de calculateur comprenant des instructions qui, lorsqu'elles sont exécutées sur un ou plusieurs processeurs d'un appareil pour la communication sans fil, amènent l'appareil à réaliser le procédé selon l'une des revendications 1 à 12.
